# EUROPEAN PATENT APPLICATION

(11) **EP 1 647 582 A2**
(43) Date of publication of application: **19.04.2006**
(21) Application number: 05256244.4
(22) Date of filing: 06.10.2005
(51) Int. Cl.: C09D 11/00

(54) **Polymeric emulsions for ink jet inks**

(30) Priority: 12.10.2004 US 617734
(71) Applicant: Rohm and Haas Company, Philadelphia, PA 19106-2399 (US)
(72) Inventor: Johnson, Eric Alvin, Lansdale, Pennsylvania 19446 (US); Chung, Chao-Jen, North Wales, Pennsylvania 19454 (US)
(74) Representative: Kent, Venetia Katherine

(57) **Abstract**

This invention concerns polymeric emulsion binders which are suitable for use in ink jet inks. More specifically, this invention relates to ink jet inks comprised of polymeric binder emulsions comprising low levels of water soluble material, and ink jet inks comprising a polymeric binder emulsion with a low level of water soluble materials.

## Description

This invention concerns polymeric emulsion binders which are suitable for use in ink jet inks. More specifically, this invention relates to ink jet inks comprised of polymeric binder emulsions comprising low levels of water soluble material, and ink jet inks comprising a polymeric binder emulsion with a low level of water soluble materials.

Certain ink jet inks comprise a liquid medium, a colorant, such as a pigment or dye, a binder or resin to aid in dispersing the pigment in the medium and to affix the colorant to the print surface. In order to create more durable print quality, particularly in terms of color-fastness and water- and rub-resistance of the printing ink, there has been interest in preparing ink jet inks which contain polymeric binders that improve the water- and rub-resistance of the printed image. Dye based colorants are generally absorbed to some degree by the paper or other print medium, but due to their inherent water-solubility do not offer good waterfastness. Pigment-based inks are generally deposited on the surface of the print medium, making them susceptible to removal by water or abrasion. As a result, both types of ink jet inks have a tendency to have insufficient wet rub resistance and highlighter resistance for many applications. Polymeric binders have been added to ink jet ink compositions to improve durability, to improve print quality and to reduce color bleeding and feathering. However, the inclusion of such binders can sometimes result in increased print head maintenance problems, including clogging of the nozzles and kogation, i.e. formation of film on or about the heater. Also, polymers may impact the rheology of the ink jet inks, and also may form films on the nozzle plate, restricting the speed and accuracy of the printing operation. The addition of polymers to ink jet ink compositions also may cause decreased pigment emulsion stability and, in the case of thermal print heads, interfere with bubble formation. The challenge of achieving good print operability is increasing in difficulty as printers are being driven to deliver higher print speeds.

Print Appearance is an overall assessment of print uniformity (both within and between pages), line sharpness, feathering, and the appearance of missing or misdirected nozzles. The term "print longevity", as used herein, means an accumulative evaluation of printer performance, including print appearance and uniformity, page after page longevity of print quality and uniformity, nozzle drop outs, print head maintenance problems, and the ability to stop and restart printing.

EP-A-0869 160 discloses an ink jet ink formulation with colorant, vehicle and resin emulsion containing ionic carboxylic groups in the resin emulsion particles to cause disassociation of the colorant and resin particles. The resin has 1 to 40 wt.% "carboxylic acid groups", and Tg of 0 to 120°C. Exemplified embodiments of the resin include copolymers of butyl acrylate, methyl methacrylate and (meth)acrylic acid, with 3 to 20 wt.% acid, Tg of 53 to 95°C and particle size of 63 to 235 nm, utilizing high Tgs and low particle sizes.

US6541590B1 discloses an ink jet binder based on the combination of a polymerizable surfactant (0.05 to 5 wt %) and ethylenically unsaturated carboxylic acid (4 to 5 wt %). Exemplified embodiments of the resin include copolymers of (meth)acrylate monomers and carboxylic acid monomers that result in a Tg of -40°C to 120°C, and a molecular weight in the range of 10,000 to 2,000,000 Daltons. The emulsion latex particles have a average particle size of 100 to 400 nm.

US6432192B1 discloses the application of purification techniques such as ultrafiltration to remove impurities such as metal ions and other unwanted reaction by-products from pigment synthesis processes. Metal ions are especially detrimental to ejection stability especially during jetting using thermal ink jet printheads and can also destabilize anionic binders in particular when used as part of the ink jet ink formulation.

It is an object of the present invention to provide an ink jet ink comprising a polymeric emulsion binder, a colorant and a liquid carrier, that demonstrates improved print longevity and print appearance characteristics.

Accordingly, the present invention provides an inkjet ink comprising a colorant, a liquid medium, and a polymeric binder emulsion, said polymer comprising as polymerized units one or more hydrophilic monomers, and said polymeric binder emulsion having a serum fraction of hydrophilic monomer derived units of no more than 25 weight percent. The present invention further provides a method of preparing an inkjet ink comprising: (a) preparing a polymeric binder emulsion having a polymer, said polymer comprising as polymerized units one or more hydrophilic monomers, (b) subjecting said polymeric binder emulsion to a fine filtration technique to reduce the serum fraction of hydrophilic monomer derived units, and (c) formulating said inkjet ink by combining the fine filtered polymeric binder emulsion with a colorant and a liquid medium.

Ink jet inks of the present invention demonstrate improvements over similar ink jet inks comprising polymeric emulsion binders which contain higher serum fraction of hydrophilic monomer derived units. In particular it has been found that reduction of the serum fraction of hydrophilic monomer derived units in polymeric emulsion binders used in inks of the current invention result in the ability to improve optical density, and overcome print longevity problems that plague some polymeric emulsion binder containing ink jet inks.

It is desirable, when preparing polymeric emulsions, to include hydrophilic monomers which may or may not be capable of being ionically charged, to improve emulsion stability as well as stability of the final formulated product (e.g, ink, coating, adhesive). Polymeric emulsion synthesis products comprising hydrophilic monomers contain materials that are soluble in the water or serum phase. Typically this serum phase material is comprised of unreacted hydrophilic monomers, and reaction products (e.g., dimers, oligomers and polymers) derived, at least in part, from hydrophilic monomers. It is these units that comprise the serum phase material in the polymeric emulsion, and is collectively referred to as "hydrophilic monomer derived units."

It has now been found that the presence of such serum phase materials can have detrimental effects on ink rheology, kogation and nozzle clogging leading to poor print longevity, print appearance and consequently poor image quality. For the purpose of this invention the serum fraction of hydrophilic monomer derived units is defined as the ratio of hydrophilic monomer derived units in the serum phase to the total amount of hydrophilic monomer charged during polymerization, and can be expressed as a percentage.

This invention demonstrates that by preparing polymeric binder emulsions with low serum fraction of hydrophilic monomer derived units, many of the detrimental effects observed when using said binders in ink jet ink applications can be reduced or eliminated.

The serum fraction of hydrophilic monomer derived units in acid containing emulsion polymers can be determined by monitoring the acid level in the continuous phase of the emulsion. The serum fraction of hydrophilic monomer derived units may also comprise monomers other than acid functional monomers, such as for example, amide functional monomers, amine functional monomers, hydroxyl functional monomers, acetate functional monomers, phosphorous functional monomers, sulfur functional monomers, anhydride functional monomers and poly(ethylene glycol) containing monomers such as for example poly(ethylene glycol)methyl ether (meth)acrylate. In the case where the serum fraction of hydrophilic monomer derived units are not acid functional in nature, any analytical technique that can quantitatively measure the hydrophilic monomer and water soluble materials comprising said hydrophilic monomers can be used to determine the level of serum fraction of hydrophilic monomer derived units in the emulsion. Such techniques include, but are not limited to nuclear magnetic resonance spectroscopy or pyrolysis gas chromatography mass spectrometry. Where the hydrophilic monomer is a nitrogen containing monomer, any method for quantitative determination of nitrogen can be used, such as for example, Kjeldahl Nitrogen determination.

In accordance with the present invention, there is provided an ink jet ink composition, comprising a colorant, a polymeric binder emulsion and a liquid medium, wherein the polymeric binder emulsion contains a serum fraction of hydrophilic monomer derived units less than 25 weight percent, or less than 15 weight percent.

Reduced serum fraction of hydrophilic monomer derived units can be achieved in polymeric emulsions by using any fine filtration technique known to one skilled in the art which is capable of removing water soluble materials, such as for example, ultrafiltration, diafiltration, dialysis, ion exchange or reverse osmosis. Reduced serum fraction of hydrophilic monomer derived units may also be achieved by improving the reactivity of hydrophilic monomers so that a higher percentage is incorporated into the polymer particle, or by removing at least a portion of the water soluble material after polymerization.

In addition to the hydrophilic monomers which can be used to stabilize an emulsion polymer, other suitable ethylenically unsaturated monomers that may be used as comonomers include one or more monomers selected from, but not limited to: substituted, e.g. hydroxy- or acetoacetoxy-substituted and unsubstituted (C₁ to C₅₀, preferably C₁-C₂₂, most preferably C₁ to C₁₈) alkyl (meth) acrylates, styrene and substituted styrenes, vinyl acrylates, vinyl acetates, fluoromethacrylates, acrylamide, substituted acrylamides, methacrylamides, substituted methacrylamides, and combinations thereof. Among the esters of acrylic acid and methacrylic acid, preferred monomers include methyl acrylate, ethyl acrylate, propyl acrylate, butyl acrylate, ethylhexyl acrylate, lauryl acrylate, methyl methacrylate, ethyl methacrylate, propyl methacrylate, butyl methacrylate, lauryl methacrylate, isobutylene methacrylate, hydroxyethyl (meth)acrylate and acetoacetoxy (meth)acrylate. Most preferably, the monomers are selected from the group consisting of methyl acrylate, ethyl acrylate, propyl acrylate, butyl acrylate, ethylhexyl acrylate, lauryl acrylate, methyl methacrylate, ethyl methacrylate, propyl methacrylate, butyl methacrylate, lauryl methacrylate, isobutylene methacrylate, styrene, acrylamide, vinyl acrylate, vinyl acetate, hydroxyethyl acrylate and hydroxyethyl methacrylate. Other ethylenically unsaturated monomers suitable for use in said invention may also include multi-ethylenically unsaturated monomers such as for example, divinylbenzene, divinylpyridine, ethyleneglycol diacrylate, trimethylolpropane triacrylate, diethyleneglycol divinyl ether, allyl methacrylate, ethyleneglycol dimethacrylate, propyleneglycol dimethacrylate, trimethylolpropane trimethacrylate, divinyl benzene, 1,3-butylene glycol dimethacrylate, polyethylene glycol 200 diacrylate, pentaerythritol tetramethacrylate, divinyl methyl phenyl silane, dimethyl vinyl disiloxane, and mixtures thereof.

Preferred hydrophilic monomers comprise one or more ethylenically unsaturated carboxylic acid functional monomers, preferably from 1 to 25 weight percent of the total monomer charge and more preferably from 1 to 15 weight percent. Other ethylenically unsaturated monomers suitable for use in said invention include stabilizing monomers known in the art such as for example, poly(ethylene glycol)methyl ether (meth)acrylate, or polymerizable surfactant monomers known in the art such as for example those described in US6541590B1, or mixtures thereof.

Where the ink jet inks of the present invention contain a polyurethane emulsion, the serum fraction of hydrophilic monomer derived units will typically be comprised of a combination of water soluble reaction products of isocyanate functional materials and hydroxyl functional materials, and the hydrolysis reaction product between water and partially reacted isocyanate functional reactants.

The polymeric emulsion binders used in ink jet inks of the present invention may further comprise additional components which do not substantially alter the characteristics described above, including without limitation process aids such as surfactants (emulsifiers), protective colloids, and other stabilizers known to those skilled in the art such as for example polymeric dispersants including but not limited to random, block and graft copolymer dispersants, and basic components and biocidal components. Suitable surfactants, for example, include sodium lauryl sulfate, sodium dodecylbenzene sulfonate, sodium dioctyl sulfosuccinate, and ammonium perfluroralkyl sulfonates, Triton™ X-100, Triton X-405,and polyoxyethylenated polyoxypropylene glycols.

Preferably the binder comprises an addition polymer with a glass transition temperature, Tg, of at least -40°C, or in the range from -35 to about 120°C, or in the range from -35 to 20°C. Tg can be determined by the Fox equation. The polymer binder emulsion comprises polymer particles with an average diameter small enough to be jettable through an ink jet printhead, typically less than 600nm, or less than 400 nm. The particle size distribution of the binder polymer may be unimodal, bimodal or polymodal.

The molecular weight of the polymeric emulsion binder useful in the present invention can be in the range from about 5,000 to about 2,000,000 Daltons, or in the range of 50,000 to 1,000,000 Daltons. The molecular weight as used herein is defined as the weight average molecular weight and may be determined by gel permeation chromatography in THF as solvent.

The binder may be incorporated in an ink composition, preferably an ink jet ink composition, comprising, for example, pigment, binder and an aqueous medium. Depending on the ink jet ink printer and printhead the binder is present at a level of 0.1 to 15 weight percent, or, 0.5 to 8 weight percent, or 1 to 5 weight percent relative to the total weight of the ink composition. The aqueous carrier may be water; preferably, deionized water. In one embodiment, the aqueous carrier is present at from about 40% to about 95%, or from about 55% to about 80%, or from about 70% to about 80% by weight of the ink composition. Selection of a suitable mixture for the ink composition using the binder of the present invention depends upon the requirements of the specific ink being formulated, such as the desired surface tension and viscosity, the pigment used, the drying time required for the pigmented ink and the type of substrate onto which the ink will be printed.

The ink jet ink of the present invention may also include water miscible materials such as humectants, dispersants, penetrants, chelating agents, cosolvents, defoamers, buffers, biocides, fungicides, viscosity modifiers, bactericides, surfactants, anti-curling agents, anti-bleed agents and surface tension modifiers, all as is known in the art. Useful humectants include hydroxy functional compounds such as ethylene glycol, 1,3 propanediol, 1,4 butanediol, 1.4 cyclohexanedimethanol, 1,5 pentanediol, 1,6 hexanediol, 1,8 octanediol, 1,2 propanediol, 1,2 butanediol, 1,3 butanediol, 2,3 butanediol, diethylene glycol, triethylene glycol, tetraethylene glycol, polyethylene glycol with average molecular weight of 200, 300, 400, 600, 900, 1000, 1500 and 2000, dipropylene glycol, polyproylene glycol with average molecular weight of 425, 725, 1000, and 2000, as well as compounds such as 2-pyrrolidone, 1-methyl-2-pyrrolidone, 1-methyl-2-piperidone, N-ethylacetamide, N-methlpropionamide, N-acetyl ethanolamine, N-methylacetamide, formamide, 3-amino-1, 2-propanediol, 2,2-thiodiethanol, 3,3-thiodipropanol, tetramethylene sulfone, butadiene sulfone, ethylene carbonate, butyrolacetone, tetrahydrofurfuryl alcohol, glycerol, 1,2,4-butenetriol, trimethylpropane, pantothenol, Liponic EG-1. Preferred humectants are polyethylene glycol with average molecular weight of 400 to 1000, 2-pyrrolidone 2,2 thiodiethanol, and 1,5 pentanediol. Preferred penetrants include n-propanol, isopropyl alcohol, 1,2 hexanediol, and hexyl carbitol.

The ink composition of the present invention may further comprise additional components including without limitation process aids such as other (free) surfactants, protective colloids, and other stabilizers known to those skilled in the art. Suitable surfactants, for example, include sodium lauryl sulfate, sodium dodecylbenzene sulfonate, sodium dioctyl sulfosuccinate, and ammonium perfluroralkyl sulfonates, Triton X-100, Triton X-405, and polyoxyethylenated polyoxypropylene glycols, and fluoro functional and silicon functional surfactants such as for example those described in EP-A-0882770.

Examples of colorants useful in the method of the present invention are selected from the group of pigments and dyes generally useful in ink jet printing. Suitable organic pigments include carbon black, azo compounds, phthalocyanine pigments, quinacridone pigments, anthraquinone pigments, dioxazine pigments, indigo, thioindigo pigments, perynone pigments, perylene pigments, and isoindolene. Suitable inorganic pigments include titanium dioxide, iron oxide, and other metal powders. The amount of pigment is generally determined by the desired properties of the ink to be made. Suitable pigments for use in this invention may include polymer dispersed, self dispersed or mixtures thereof. Dyes suitable as colorants for inks used in this invention include water soluble dyes, dispersed dyes and polymer dispersed dyes, such as for example those described in WO0250197A1 and US6455611B1, or mixtures thereof.

Generally, the amount of colorant used is less than 10% and is typically from 3-6% by weight based on the total weight of all the components of the ink. Preferably the colorant is insoluble in the liquid medium. More preferably the colorant is a pigment. A plurality of inks may be combined to form a set, such as a set of cyan, yellow, magenta, and black, as well as any combination of known colors used as sets in inkjet ink printing.

The amount of humectant used is determined by the properties of the ink and may range from 1-30%, preferably from 5-15% by weight, based on the total weight of all the components in the ink. Examples of commonly used humectants useful in forming the ink are: glycols, polyethylene glycols, glycerol, ethanolamine, diethanolamine, alcohols, saccharides and pyrrolidones. Other humectants known in the art may be used as well.

The use of suitable penetrants will depend on the specific application of the ink. Useful examples include pyrrolidone, and N-methyl-2-pyrrolidone.

The amount of defoaming agent in the ink, if used, will typically range from 0.05-0.5% by weight, and is more typically 0.1 wt.%. The amount required depends on the process used in making the pigment dispersion component of the ink. Defoaming agents useful in forming aqueous dispersions of pigments are well known in the art and commercially available examples include Surfynol 104H and Surfynol DF-37 (Air Products, Allentown, PA).

The remaining portion of the ink is generally water. The amount of water preferably is from 45-90% by weight, or from 55-80% by weight, based on the total weight of all the components in the ink.

The ink compositions of the present invention may be prepared by any method known in the art for making such compositions, for example, by mixing, stirring or agitating the ingredients together using any art recognized technique to form an aqueous ink. The procedure for preparation of the ink composition of the present invention is not critical except to the extent that the ink composition is homogenous.

While not meant to be limiting as a method of preparing the ink of the current invention, one method for preparation is as follows: Mix the aqueous carrier, humectant(s), surfactant(s) and penetrant(s) for 10 minutes, or until homogenous. Prepare pigment-dispersant mixture by milling a 5 to 1 ratio of pigment to dispersant to a total of 20% solids in water. Slowly add aqueous carrier/humectant/surfactant/penetrant solution to pigment-dispersant while pigment(s) remains stirring. Let stir for another 10 minutes, or until homogeneous. Slowly add the carrier, pigment dispersion, humectant, surfactant to the polymeric binder with stirring. Continue to stir for 10 minutes or until homogenous. Adjust pH of the resultant ink to 7.5 - 9.0 (e.g. by adding sufficient 20% NH₄OH). Filter through a 1 micrometer filter.

It is expected that the ink compositions of the present invention would include any additives necessary to obtain the desired physical properties required for the end use of the ink composition such additives include chelating agents, buffers, biocides, fungicides, antioxidants, rheology modifiers, thickeners, bacteriocides, surfactants, anti-curling agents, anti-bleed agents and surface tension modifiers, all as discussed above.

The invention in some of its embodiments will now be further described by reference to the following examples:

### Procedure for Determination of Serum Fraction of Acid Monomer Derived Material

### 1. Sample preparation

17.5g of latex was diluted with deionized water to 35 g and centrifuged at 18,500 rpm at 4°C for 2 hours with DuPont Sorvall Super T-21 Centrifuges equipped with SL-50T Rotor. After centrifugation, clear supernatant was carefully decanted. Dilute 17.5 g of the supernatant with deionized water to 30 g.

### 2. Titration of 30 g samples with 0.50N HCl:

The pH of the diluted supernatant was adjusted to pH = 12.0 with 0.5N KOH and titrated with 0.50N HCl with Radiometer TTT 80 titrator (by Radiometer America), RHM 84 Research pH meter (by Radiometer America) and autoburette ABU80 titrating system (by Radiometer America). The acid titer (mmoles) is equal to the volume (ml between two peaks of the first derivatives of the titration curve) X (0.5N) X ((35-(17.5X solids of latex))/17.5. The total charged acid in the latex (mmole)= 17.5 X (solids of latex) X (%MAA in the latex composition) X 1000/86. The percentage serum fraction of acid monomer derived units is calculated as acid titer / total charged acid in the latex, multiplied by 100.

The invention in some of its embodiments will now be further described by reference to the following examples:

### Emulsion 1: An addition polymer of overall composition 52 2-EHA/43 MMA/5.0 MAA was prepared in accordance with the following procedure:

A three liter flask was charged with 960g of deionized water, placed under a nitrogen atmosphere, and heated to 85°C. A monomer emulsion consisting of 275g 2-ethylhexyl acrylate (52parts), 227 g methyl methacrylate (43parts), 27 g methacrylic acid (5parts), 8.2 g of AU-1 surfactant (also known as NMS-1, 13%, Stepan Corp.), and 169 g deionized water was separately prepared. Prior to addition of this emulsion to the kettle, ammonia (22g of a 2.6% aqueous solution), ammonium persulfate (11g of a 9.6% solution), and a 54nm acrylic polymer seed (22.5g of a 22.8% solution) were added to the kettle. The monomer emulsion was then fed to the kettle with stirring at a rate of 3.3g/min. for 20 min. along with a solution of 24.6g of 2.24% aqueous ammonium persulfate at a rate of 0.2 g/min., followed by 100 minutes at 6.4 and 0.20 g/min., respectively, and a hold period of 20 min. The mixture was then cooled to 60°C, and a mixture of 2.6g of 0.15% ferrous sulfate and 0.008g Versene 220, followed by 3.2g of 4.4% t-butyl hydroperoxide (tBHP) and 6.1g of 1.6% sodium formaldehyde sulfoxylate (SFS) was added and held for 20 min., followed by a second identical portion of tBHP and SFS. The mixture was then cooled, filtered, and sufficient 29% aqueous ammonia was added to adjust the pH to a range of 8.0-9.0 (final polymer binder = 29.3% by weight polymer solids, average diameter 273nm, and pH 8.5).

### Emulsion 2: An addition polymer of overall composition 52 2-EHA/43 MMA/5.0 MAA was prepared in accordance with the following procedure:

A five liter flask was charged with 2100 g of deionized water, placed under a nitrogen atmosphere, and heated to 85° C. A monomer emulsion consisting of 615 g 2-ethylhexyl acrylate (52 parts), 507.5 g methyl methacrylate (43 parts), 59.84 g methacrylic acid (5 parts), 6.7 g of TREM LF-40 solution (36%, Henkel Corp.), and 402 g deionized water was separately prepared. Prior to addition of this emulsion to the kettle, 8.94 g of 29% ammonia in 89.3 g deionized water, 2.46 g ammonium persulfate in 22.33 g deionized water, and 50.24g of 22.8% of a 60 nm acrylic polymer seed were added to the kettle. The monomer emulsion was then fed to the kettle with stirring at a rate of 6.92 g/min. for 20 min. along with a solution of 54.8 g of 2.24% aqueous ammonium persulfate at a rate of 0.45 g/min., followed by 100 minutes at 14.51 and 0.45 g/min., respectively, and a hold period of 20 min. The mixture was then cooled to 60° C., and a mixture of 8.7 g of 0.1% ferrous sulfate followed by 7.2 g of 4.4% t- butyl hydroperoxide and 13.62 g of 1.6% sodium formaldehyde sulfoxylate was added and held for 20 min., followed by a second identical portion of tBHP and SFS. The mixture was then cooled, filtered, and sufficient 4% aqueous potassium hydroxide was added to adjust the pH to a range of 8.0-9.0 (final polymer binder=27% by weight polymer solids, average diameter 260 nm and pH 8.9).

### Example 1: Dialyzed Latex Preparation

Twenty eight grams of the emulsion described in Emulsion 1 were processed in two separate dialysis tubes in a single one gallon reservoir in accordance with the dialysis procedure described below.

### Example 2: Ultrafiltered Latex Preparation

Two liters of the emulsion described in Emulsion 1 were processed in accordance with the ultrafiltration process described below.

### Example 3: Ultrafiltered Latex Preparation

Two liters of the emulsion described in Emulsion 2 were processed in accordance with the ultrafiltration process described below.

### Example 4: Dialyzed Latex Preparation

Twenty eight grams of the emulsion described in Emulsion 2 were processed in two separate dialysis tubes in a single one gallon reservoir in accordance with the dialysis procedure described below.

### Dialysis of Latex

The latex dialysis was achieved as described below.
Fill a one gallon plastic bottle with Dl water and begin agitation with a magnetic stirrer at low speed. Cut the dialysis membrane (Spectra/Por® CE, 300,000 MW cutoff by Spectrum, Rancho Dominguez, CA) into an appropriate length so that the membrane are fully submersed in the one gallon bottle. Fold the membrane at one end and attach one of the Spectra/Por CE closures to that end, over the folded portion. Open the CE tube and load 13 to 14 grams of latex using a medicine dropper or small syringe (typically enough to fill about 8 to 10 inches of membrane tube length). Fold over the end of the filled tube and seal with a second closure clip. Rinse the filled tube and place into the one gallon container. During the process the DI water in the 1 gallon container will become cloudy and will require changing. The DI water was exchanged daily until it became clear. When the process is completed (DI water in one gallon container is no longer clouding) continue ultrafiltration for 2-3 more water exchanges, then pull the tubes and empty.

### Ultrafiltration/Diafiltration of Latex

The emulsion was ultrafiltered/diafiltered (UF/DF) to reduce the soluble components using a Romicon HF 1.0-43-PM500 available from Koch Industries, Wilmington, MA membrane. To UF/DF the emulsion, the emulsion was first diluted 2 parts emulsion to 1 part deionized water. The material was recirculated by pumping the emulsion through the membrane at a maximum head pressure of 15 psig and with a typical pressure drop of 5 to 7 psig across the length of the membrane. The permeate side of the membrane was held near ambient pressure with a counter-current flow of tap water flushing the permeate to waste. During the filtration, the volume of the material being recirculated was monitored and the serum loss was replenished by addition of deionized water to maintain the initial volume of diluted emulsion. After approximately 2 hours of diafiltration, the emulsion was concentrated back to its original concentration by withholding the addition of deionized water while continuing to recirculate the emulsion through the membrane. Once the emulsion reached its original, undiluted volume, the apparatus was drained to recover the emulsion. The serum fraction of hydrophilic monomer derived units is determined using the titration procedure described above. The results are shown for Emulsion 2 before and after being subjected to ultrafiltration.

**Table1 Serum Fraction of Hydrophilic Monomer Derived Units**

| Sample | Serum Fraction of Hydrophilic Monomer Derived Units |
|---|---|
| Emulsion 2 | 37% |
| Example 3 | 8% |
| Example 4 | 1% |

### Application Data

The experiments described below are intended to show the effect of using a polymeric binder with reduced serum fraction of hydrophilic monomer derived units, in an ink jet ink to improve its print quality. In each case, the polymeric binder was formulated into an in jet ink using the ink formulation described below, and the ink was applied to a paper (Hewlett Packard Bright White Ink Jet Paper) substrate using a Hewlett Packard DeskJet 890C printer.

**Table 2 Ink Formulation**

| **Ink Jet Ink Formulation** | |
|---|---|
| **Ingredient** | **Weight** |
| n-MethylPyrollidone | 6.4g |
| PolyEthyleneGlycol | 4.0g |
| AcryJet Black 357 | 24.8g |
| Propanediol | 4.8g |
| Liponics EG-1 | 2.0g |
| Surfynol 104E | 0.4g |
| Polymer Binder Emulsion | 20.0g |
| Water | 57.6g |
| Total | 120.0g |

Liponics™ EG-1 is a dispersant available from Lipo Chemicals, New Jersey. Surfynol® 104E is a dispersant available from Air Products, PA. AcryJet® Black 357 is a pigment dispersion available from the Rohm and Haas Company, Philadelphia, PA.

**Table 3 Results of Evaluations of Experimental Samples**

| Emulsion→ | Comparative Emulsion 1 | Example 1 (dialyzed) | Example 2 (ultrafiltered) |
|---|---|---|---|
| Evaluation Method | | | |
| Print Longevity | Good | Very Good | Very Good |
| Print Longevity | <500 pages | >500 pages | >500 pages |
| Optical Density | 1.4 | >1.5 | >1.5 |

Inks prepared from the emulsions described above were assessed by printing on an HP 895 printer utilizing the black cartridge (HP-45) which was drained, cleaned and refilled with the test ink. The test print form was a combination of black text, black fine line graphics and black block graphics. Test prints were allowed to dry at ambient conditions for one hour prior to assessment. The test printing was rated for print appearance, print longevity, and optical density.

Print Appearance is an overall assessment of print uniformity (both within and between pages), line sharpness, feathering, and the appearance of missing or misdirected nozzles. Print appearance was primarily affected by missing or miss directed nozzles during the print cycle. Print samples with no apparent missing or misdirected nozzles, determined by the lack of any breaks in fine line detail or missing rows in block graphics, were rated as very good. Those prints which were readable, but had definite breaks in fine lines, text characters and block graphics were rated as good. Optical density was measured using a MacBeth 1200 Color Checker.

Print longevity was assessed by the comparison of the Print Appearance of the 500^{th} print to that of the first ten prints printed from that cartridge. The experiment was conducted by continuously printing 500 pages of the same test print page which included a combination of black text, black fine line graphics and black block graphics. Any visually noticeable degradation in the Print Appearance was taken as a failure thus giving a Print Longevity rating of <500 pages. Inks which produced a test print after 500 pages which was visually assessed as being as good as the initial prints was given a rating of >500 pages. The primary failure mode in Print Longevity testing was the result of missing or misdirected nozzles.

## Claims

1. An inkjet ink comprising a colorant, a liquid medium, and a polymeric binder emulsion, said polymer comprising as polymerized units one or more hydrophilic monomers, and said polymeric binder emulsion having a serum fraction of hydrophilic monomer derived units of no more than 25 weight percent.

2. The inkjet ink of Claim 1 having a serum fraction of hydrophilic monomer derived units of no more than 15 weight percent.

3. The inkjet ink of Claim 1 wherein said hydrophilic monomers comprises 1 to 15 weight percent of one or more ethylenically unsaturated carboxylic acid functional monomers.

4. The inkjet ink of Claim 1, wherein the colorant is insoluble in the liquid medium.

5. An ink set comprising cyan, magenta and yellow whereby at least one of the inks of the ink set is an inkjet ink of Claim 1.

6. A method of preparing an inkjet ink comprising:
(a) preparing a polymeric binder emulsion having a polymer, said polymer comprising as polymerized units one or more hydrophilic monomers,
(b) subjecting said polymeric binder emulsion to a fine filtration technique to reduce the serum fraction of hydrophilic monomer derived units, and
(c) formulating said inkjet ink by combining the fine filtered polymeric binder emulsion with a colorant and a liquid medium.

7. The method of Claim 6 wherein the fine filtration technique is one or more of ultrafiltration, diafiltration, dialysis, ion exchange, reverse osmosis or combinations thereof.

8. The method of Claim 6 wherein after the fine filtration technique, said polymeric binder emulsion has a serum fraction of hydrophilic monomer derived units of no more than 25 weight percent.

9. The method of Claim 6 wherein after the fine filtration technique, said polymeric binder emulsion has a serum fraction of hydrophilic monomer derived units of no more than 15 weight percent.

10. The method of Claim 6 wherein said hydrophilic monomers comprises 1 to 25 weight percent of one or more ethylenically unsaturated carboxylic acid functional monomers.

11. The method of Claim 6, wherein the colorant is insoluble in the liquid medium.
